# EUROPÄISCHE PATENTSCHRIFT

(11) **EP 1 748 360 B1**
(45) Veröffentlichungstag und Bekanntmachung des Hinweises auf die Patenterteilung: **20.03.2019**
(21) Anmeldenummer: 06013061.4
(22) Anmeldetag: 24.06.2006
(51) Int. Cl.: G06F 8/65, G06F 9/445, G07C 5/08

(54) **System und Verfahren zum Ausführen eines parallelisierten Softwareupdates**
System and method for executing a parallelised software update
Système et procédé destinés à réaliser une mise à jour logicielle parallélisée

(30) Priorität: 26.07.2005 DE 102005034820
(43) Veröffentlichungstag der Anmeldung: 31.01.2007
(73) Patentinhaber: Volkswagen Aktiengesellschaft, 38440 Wolfsburg (DE)
(72) Erfinder: Hartkopp, Oliver, 31228 Peine (DE)
(74) Vertreter: Zucker, Volker

(56) Entgegenhaltungen:
- DE-A1- 10 107 263
- DE-A1-102004 020 880
- DE-A1-102005 057 776
- US-A1- 2005 097 541
- US-B1- 6 347 363
- ZELTWANGER H: "AN INSIDE LOOK AT THE FUNDAMENTALS OF CAN ORIGINALLY DESIGNED FOR AUTOMOBILES, THE CONTROLLER AREA NETWORK (CAN) IS A SERIAL BUS WITH LARGE POTENTIAL USE IN INDUSTRY" CONTROL ENGINEERING INTERNATIONAL, REED BUSINESS INFORMATION, HIGHLANDS RANCH, CO, US, Bd. 42, Nr. 1, Januar 1995 (1995-01), Seiten 51-54,56, XP000500026 ISSN: 0010-8049
- "BOSCH CAN SPECIFICATION VERSION 2.0" BOSCH CAN SPECIFICATION VERSION 2.0, September 1991 (1991-09), Seiten 1-69, XP002291910

## Beschreibung

System und Verfahren zum Ausführen eines parallelisierten Softwareupdates Die Erfindung betrifft ein System zum Ausführen eines parallelisierten Softwareupdates, umfassend einen Computer, auf dem ein multi-tasking-fähiges Betriebssystem ausführbar ist, mindestens zwei Anwendungen, die mittels des Betriebssystems auf dem Computer parallel ausführbar sind, mindestens zwei Steuergeräte, die über ein serielles Datenbus-System, insbesondere Datenbus-System, miteinander und dem Computer verknüpft sind, und eine in das Betriebssystem eingepasste Datenbus-Schnittstelle, wobei zwischen einer der mindestens zwei Anwendungen und einem der mindestens zwei Steuergeräte über die in das Betriebssystem eingepasste Datenbus-Schnittstelle ein Kommunikationskanal ausbildbar ist. Die Erfindung betrifft ferner ein Verfahren zum parallelisierten Ausführen eines Softwareupdates eines von mindestens zwei Steuergeräten mittels einer von mindestens zwei Anwendungen, die mittels eines multi-tasking-fähigen Betriebssystems auf einem Computer parallel ausführbar sind, wobei die mindestens zwei Steuergeräte über ein Datenbus-System, insbesondere CAN-Bus-System miteinander und mit dem Computer verknüpft sind und wobei in das Betriebssystem eine Datenbus-Schnittstelle eingepasst ist, umfassend ein Ausbilden eines Kommunikationskanals zwischen einer der mindestens zwei Anwendungen und einem der mindestens zwei Steuergeräte über die in das Betriebssystem eingepasste Datenbus-Schnittstelle. Datenbus-Systeme sind serielle Bussysteme, die heutzutage häufig in Fahrzeugen eingesetzt werden, um Steuergeräte miteinander zu verknüpfen. Für die Datenbusse existiert ein genormtes Medienzugangssteuerungsprotokoll. Dieses Medienzugangssteuerungsprotokoll regelt den Zugriff der einzelnen Steuergeräte auf das Übertragungsmedium, welches als serieller Bus ausgebildet ist. Auf das Medienzugangssteuerungsprotokoll bauen so genannte Transportprotokolle und Verfahren auf.

Die US Patentanmeldung Nummer US2005097541 offenbart ein Fahrzeug-Software-Installations-, Upgrade- und Diagnosesystem zur Verwendung bei der Fahrzeugmontage, mithilfe eines tragbaren Speichergeräts, beispielsweise ein USB-Flash-Disk. Das Gerät empfängt Diagnoseinformationen über eine Kommunikationsschnittstelle mit offener Architektur eines Fahrzeugs, beispielsweise eine USB-Schnittstelle. Ein externer Prozessor verfügt über eine Kommunikationsschnittstelle mit offener Architektur und kann die Diagnoseinformationen vom tragbaren Gerät empfangen und analysieren. Gemäß verschiedenen Aspekten verifiziert die Analyse der Diagnoseinformationen die erfolgreiche Installation und das Testen der Fahrzeugsoftware, die von dem tragbaren Gerät an die verschiedenen Fahrzeugsteuergeräte übertragen wird, identifiziert die Softwareversionen, die im Fahrzeug gespeichert sind, und die zugehörige Aktualisierungshistorie zum Herunterladen und Installieren eines geeigneten Software-Upgrades. Fahrzeugprobleme werden gemäß erfassten Fahrzeugzuständen und vorbestimmten Fehlererfassungskriterien diagnostiziert.

Die deutsche Patentanmeldung DE10107263 offenbart ein Verfahren und eine Vorrichtung zur fahrzeugtypischen Programmierung von Fahrzeugsteuergeräten. Diese Programmierung von Steuergeräten wird dadurch erreicht, dass während der Produktion eines Kraftfahrzeugs zumindest eine Kennung ausgesendet wird, dass die Kennung von einer externen Programmiereinheit empfangen wird, dass mit Hilfe der Programmiereinheit in Abhängigkeit von der Kennung zumindest eine fahrzeugtypische Steuergeräte-Software ausgesendet wird, dass die fahrzeugtypische Steuergeräte-Software von dem Fahrzeug empfangen wird und dass zumindest ein Steuergerät des Kraftfahrzeugs mit zumindest einer der zumindest einen empfangenen, fahrzeugtypischen Steuergeräte-Software programmiert wird.

Datenbus-Systeme haben sich insbesondere im Fahrzeugbau durchgesetzt. Moderne Fahrzeuge umfassen eine Vielzahl von Steuergeräten, die untereinander Daten austauschen. Dieser Datenaustausch wird vorzugsweise über ein serielles Bussystem, das vorzugsweise als CAN-Bus-System ausgestaltet ist, ausgeführt. Die zum Einsatz kommenden Transportprotokolle sind häufig fahrzeugherstellerspezifisch oder steuergeräteherstellerspezifisch.

Moderne Fahrzeuge bieten einen Zugang zu dem fahrzeuginternen Datenbus-System für einen externen Computer. Mit Hilfe von Anwendungen, die auf dem Computer ausgeführt werden, ist es möglich, über das Datenbus-System eine Diagnose der einzelnen Steuergeräte des Fahrzeugs auszuführen. Zusätzlich kann die Verbindung über das Datenbus-System genutzt werden, um die Software einzelner Steuergeräte oder aller Steuergeräte zu aktualisieren. Eine solche Aktualisierung der Software eines Steuergerätes wird als Softwareupdate bezeichnet. Hierbei kann die gesamte auf dem Steuergerät gespeicherte Software oder nur ein Teil der Software ausgetauscht und/oder erneuert werden. Somit ist es möglich, den einzelnen Steuergeräten des Fahrzeugs auch nach einer Auslieferung des Fahrzeugs neue zusätzliche Funktionalitäten zu verleihen. Ferner können Fehler, die erst nach einer Auslieferung des Fahrzeugs festgestellt werden, einfach beseitigt werden, ohne dass ein Austausch des bzw. der betroffenen Steuergeräte notwendig ist.

Insbesondere in der Vorserienproduktion und zu einem Beginn einer Serienfertigung eines Fahrzeugtyps ist es notwendig, bereits im Fertigungswerk die Software einzelner Steuergeräte zu erneuern und/oder zu ergänzen. Ferner spielt die Diagnose der Steuergeräte über einen mit dem Datenbus-System des Fahrzeugs verknüpften Computer eine große Rolle.

Bei den heute am Markt befindlichen Computersystemen ist in die verschiedenen Betriebssysteme jeweils eine Datenbus-Schnittstelle eingepasst, die als serielle Zeichentreiberschnittstelle ausgebildet ist. Eine Zeichentreiberschnittstelle zeichnet sich dadurch aus, dass die über diese Zeichentreiberschnittstelle ansprechbare Hardware, in diesem Fall das Datenbus-System, nur von einer einzigen Anwendung des Computersystems angesprochen werden kann. Wird beispielsweise eine Diagnose eines Steuergerätes mittels einer Diagnoseanwendung über das Datenbus-System ausgeführt, so kann eine zweite, getrennt von der ersten Anwendung auf dem Computer ausgeführte Update-Anwendung nicht auf den Datenbus zugreifen und auf dem anderen Steuergerät ein Softwareupdate ausführen. Bei den gegenwärtig am Markt verfügbaren Systemen werden die fahrzeughersteller- bzw. steuergeräteherstellerspezifischen Transportprotokolle jeweils in den einzelnen Anwendungen umgesetzt.

Die Beschränkung, dass nur eine Anwendung, die auf dem Computer ausgeführt wird, auf das Datenbus-System zugreifen kann, bewirkt den Nachteil, dass ein Softwareupdate erst nach einer Beendigung der Diagnose des ersten Steuergeräts durchgeführt werden kann, obwohl die auf dem Datenbus-System zur Verfügung stehende Übertragungsbandbreite während der Diagnose nicht ausgelastet wird.

Der Erfindung liegt daher das technische Problem zugrunde, ein System und ein Verfahren zum parallelisierten Softwareupdate zu schaffen, mit dem ein Softwareupdate eines Steuergerätes parallel zu einem Datenaustausch eines anderen Steuergerätes mit einer anderen Anwendung über den Datenbus möglich ist.

Die Aufgabe wird erfindungsgemäß durch ein System eingangs genannter Art gelöst, bei dem die Datenbus-Schnittstelle als in das Betriebssystem eingepasste Netzwerkschnittstelle ausgebildet ist und von einer weiteren der mindestens zwei Anwendungen über die Datenbus-Schnittstelle parallel zu der einen der mindestens zwei Anwendungen ein weiterer Kommunikationskanal zu einem weiteren der mindestens zwei Steuergeräte ausbildbar ist und ein Softwareupdate des weiteren der mindestens zwei Steuergeräte über diesen weiteren Kommunikationskanal ausführbar ist. Ferner wird die technische Aufgabe durch ein Verfahren eingangs genannter Art gelöst, bei dem von einer weiteren der mindestens zwei Anwendungen über die Datenbus-Schnittstelle, die als in das Betriebssystem eingepasste Netzwerkschnittstelle ausgebildet ist, parallel zu der einen der mindestens zwei Anwendungen ein weiterer Kommunikationskanal zu einem weiteren der mindestens zwei Steuergeräte ausgebildet wird und ein Softwareupdate auf dem weiteren der mindestens zwei Steuergeräte über diesen weiteren Kommunikationskanal durchgeführt wird. Weitere vorteilhafte Ausgestaltungen ergeben sich aus den Unteransprüchen.

Vorteil der Erfindung ist, dass parallel, d.h. zeitgleich, über den seriellen CAN-Bus zwei Anwendungen Kommunikationskanäle zu unterschiedlichen Steuergeräten ausbilden können. Hierdurch wird eine Zeitersparnis erreicht, wenn beispielsweise zusätzlich zu einer Diagnose des einen der mindestens zwei Steuergeräte an einem weiteren der mindestens zwei Steuergeräte ein Softwareupdate auszuführen ist. Unter zeitgleich oder parallel ist zu verstehen, dass die Anwendungen, wie bei einem Multi-tasking-System üblich, in kurzen Zeitabständen Prozessorleistungen zugeteilt bekommen. Hierdurch wird es möglich, dass über das Datenbus-System zeitgleich Daten verschiedener Anwendungen übertragen werden können. Selbstverständlich hat die Übertragung der einzelnen Daten der verschiedenen Anwendungen über das serielle Datenbus-System zeitversetzt, jedoch verschachtelt, zu erfolgen.

Als besonders vorteilhaft erweist sich die Erfindung in solchen Situationen, in denen die eine der mindestens zwei Anwendungen eine Diagnoseanwendung ist. Während die Diagnose von der einen Diagnoseanwendung durchgeführt wird, kann im Hintergrund zeitlich parallel auf dem weiteren Steuergerät ein Softwareupdate ausgeführt werden. Diese Situation wird in Zukunft bei der Wartung von Kraftfahrzeugen regelmäßig auftreten. Wenn die Fahrzeuge in einer Werkstatt gewartet werden, werden standardmäßig einzelne Steuergeräte einer Diagnose unterzogen.

Ebenso wird es von dem Fahrzeughersteller regelmäßige Softwareupdates für einige oder alle der Steuergeräte des Fahrzeugs geben, um aufgetretene Fehler zu beseitigen und/oder neue Funktionalität der Steuergeräte hinzuzufügen. Da Diagnosegeräte teuer sind, ist es vorteilhaft, wenn sie nur eine kurze Zeit mit dem Fahrzeug verbunden sein müssen. Dadurch, dass parallel zur Diagnose das oder die Softwareupdates durchführbar sind, wird somit die Zeit verringert, die ein Diagnosecomputer mit dem Fahrzeug verknüpft sein muss. Hierdurch kann die Anzahl der Diagnosecomputer, die in einer Werkstatt benötigt werden, um eine vorgegebene Anzahl von Fahrzeugen warten zu können, verringert werden bzw. die Anzahl der Fahrzeuge, die gewartet werden kann, erhöht werden.

Aus Sicherheits- und Designgründen verfügen viele Fahrzeuge heute bereits über mehrere Datenbusse, die beispielsweise über ein Gateway miteinander verknüpft sind. Bei diesen Systemen erfolgt ein Zugriff eines externen Computers für einen Wartungszugriff in der Regel über das Gateway. Aus Sicherheitsgründen kann es jedoch vorteilhaft sein, dass ein Fahrzeug einzelne, voneinander getrennte Datenbus-Systeme umfasst. Bei einer Wartung werden daher diese mehreren, voneinander getrennten Datenbus-Systeme mit einem einzigen Diagnosecomputer verbunden. Eine besonders bevorzugte Ausführungsform der Erfindung sieht daher vor, dass mit dem Computer mindestens ein weiteres, von dem Datenbus-System getrenntes Datenbus-System verknüpft ist, an dem mindestens zwei andere Steuergeräte angeschlossen sind und von anderen der mindestens zwei Anwendungen über die Datenbus-Schnittstelle parallel zu mindestens zwei der mindestens zwei anderen Steuergeräte über das weitere Datenbus-System Kommunikationskanäle ausbildbar sind. Hierdurch ist es möglich, auf den verschiedenen CAN-Bus-Systemen zeitgleich mittels verschiedener Anwendungen Softwareupdates mehrerer Steuergeräte durchzuführen.

Einzelne Steuergeräte oder auch einzelne voneinander getrennte Datenbus-Systeme können verschiedene spezifische Transport-Protokolle für den Austausch von Daten verwenden. Eine besonders bevorzugte Weiterbildung der Erfindung sieht daher vor, dass die Datenbus-Schnittstelle verschiedene spezifische Transport-Protokolle umfasst und für diese eine einheitliche Programmier- und/oder Zugriffschnittstelle zur Verfügung stellt. Hierdurch wird es möglich, besonders einfache Anwendungen für die Diagnose und insbesondere das Softwareupdate zu schreiben. Ein Programmierer kann somit mit Hilfe der ihm bekannten Verfahren und Mechanismen in einfacher Weise Anwendungen für die Steuergeräte schreiben, die über das oder die Datenbus-System mit dem Computer verknüpfbar sind. Ebenso wird die Notwendigkeit gesenkt, detaillierte Kenntnisse über die verschiedenen spezifischen Transport-Protokolle zu besitzen bzw. zu erwerben. Hierdurch wird eine Anwendungsprogrammierung auf dem Computer erleichtert und beschleunigt. Hierdurch können insbesondere Kosten für die Integration neuer Steuergeräte in neue Fahrzeugserien stark reduziert werden, da beispielsweise fertige Anwendungen zugekauft werden können.

Als besonders vorteilhafte Ausgestaltung der Erfindung ist daher vorgesehen, dass die mindestens zwei Anwendungen unabhängig von den spezifischen Transportprotokollen sind.

Die Merkmale des erfindungsgemäßen Verfahrens, in dem unabhängigen Anspruch 5 offenbart, weisen dieselben Vorteile wie die entsprechenden Merkmale des erfindungsgemäßen Systems, in dem unabhängigen Anspruch 1 offenbart, auf.

Nachfolgend wird die Erfindung anhand bevorzugter Ausführungsbeispiele unter Bezugnahme auf eine Zeichnung näher erläutert. Die Fig. zeigen:
- Fig. 1: eine schematische Darstellung eines Systems zum Ausführen eines Softwareupdates nach dem Stand der Technik;
- Fig. 2: eine schematische Darstellung einer Ausführungsform eines Systems zum Ausführen von parallelisierten Softwareupdates von Steuergeräten an einem CAN-Bus-System; und
- Fig. 3: eine schematische Darstellung einer Ausführungsform eines Systems zum Ausführen parallelisierten Softwareupdates an voneinander getrennten CAN-Bus-Systemen.

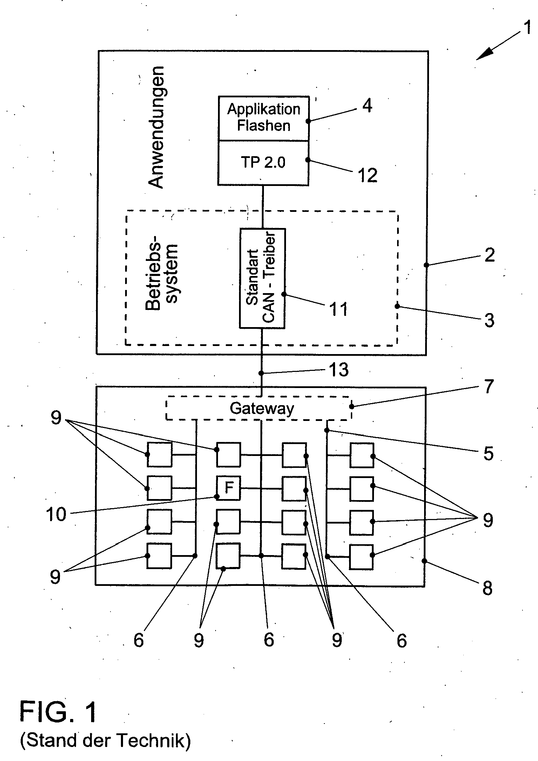

Fig. 1 zeigt eine schematische Darstellung eines Systems 1 zum Ausführen eines Softwareupdates nach dem Stand der Technik. Das System umfasst einen Computer 2. Bei dem Computer 2 kann es sich um einen Personal-Computer oder eine beliebige andere programmgesteuerte Vorrichtung handeln, die ein Betriebssystem 3 umfasst, mit dessen Hilfe mindestens eine Anwendung 4 ausführbar ist. Das Betriebsystem 3 kann ein multi-tasking-fähiges Betriebssystem sein. Mit dem Computer 2 ist ein CAN-Bus-System 5 verknüpft. Das CAN-Bus-System 5 kann einen oder mehrere serielle CAN-Busse 6 umfassen. Umfasst das CAN-Bus-System 5 mehrere CAN-Busse 6, so sind diese über ein Gateway 7 miteinander verknüpft. Die Verknüpfung des Computers 2 mit dem CAN-Bus-System 5 erfolgt in einem solchen Fall über das Gateway 7. Das CAN-Bus-System 5 ist beispielsweise in ein Fahrzeug 8 integriert. An die seriellen CAN-Busse 6 sind Steuergeräte 9, 10 angeschlossen, die über die seriellen CAN-Busse 6 und das Gateway 7 miteinander verknüpft sind.

In das Betriebssystem 3 des Computers 2 ist eine CAN-Bus-Schnittstelle 11 eingepasst, die als serielle Zeichentreiberschnittstelle ausgebildet ist. Eine Zeichentreiberschnittstelle zeichnet sich allgemein dadurch aus, dass über diese Zeichentreiberschnittstelle nur eine Anwendung auf die mit dieser Zeichentreiberschnittstelle verknüpfte Hardware zugreifen kann. In dem hier beschriebenen System 1 kann die Anwendung 4 über die CAN-Bus-Schnittstelle 11 auf das CAN-Bus-System 5 zugreifen. Hierzu umfasst die Anwendung 4 eine Implementierung eines spezifischen Transport-Protokolls 12. Die Anwendung 4 ist als Softwareupdateanwendung ausgebildet und öffnet über die CAN-Bus-Schnittstelle 11 und das Gateway 7 des CAN-Bus-Systems 5 einen Kommunikationskanal zu dem Steuergerät 10. Über diesen Kommunikationskanal wird die Software des Steuergerätes 10 ausgetauscht und/oder ergänzt und/oder teilweise ergänzt. Das Austauschen, Ergänzen und/oder Erweitern der Software wird als Flashen bezeichnet. Eine Verbindung 13 zwischen dem Computer 2 und dem Gateway 7 ist als CAN-Bus ausgebildet.

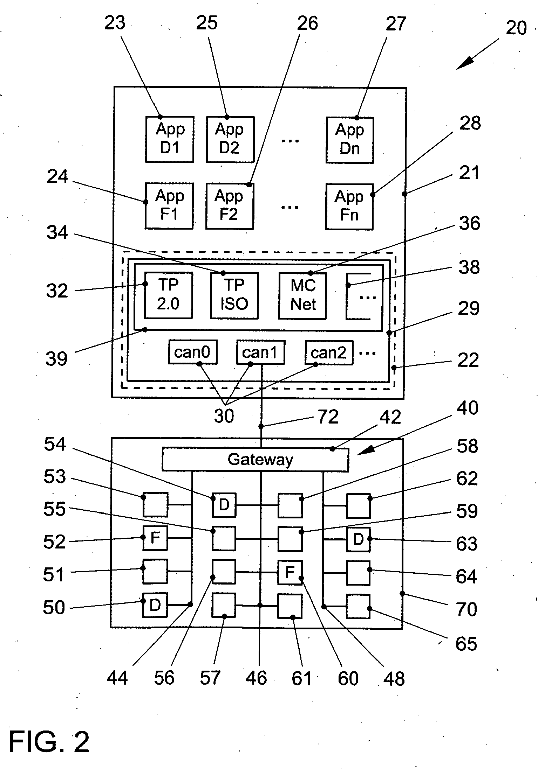

In Fig. 2 ist schematisch eine Ausführungsform eines Systems 20 zum Ausführen eines parallelisierten Softwareupdates dargestellt. Das System 20 umfasst einen Computer 21. Der Computer 21 umfasst ein Betriebssystem 22, welches multi-tasking-fähig ist. Bei dem Computer 21 kann es sich um einen Computer im engeren Sinne oder irgendeine Vorrichtung handeln, auf der programmgesteuerte Anwendungen ausführbar sind. Hierdurch ist es möglich, auf dem Computer 21 mindestens zwei der Anwendungen 23-28 parallel auszuführen. Verfügt der Computer 21 nur über eine zentrale Recheneinheit (CPU) (nicht dargestellt), so bedeutet paralleles Ausführen mehrerer der Anwendungen 23-28, dass diese zeitversetzt zeitlich ineinander verschachtelt ausgeführt werden.

Das Betriebssystem 22 umfasst eine CAN-Bus-Schnittstelle 29. Die CAN-Bus-Schnittstelle 29 umfasst mindestens einen physikalischen Treiber 30 zum Ausbilden einer CAN-Bus-Verbindung 72 mit einem CAN-Bus-System 40. Zusätzlich zu dem mindestens einen physikalischen Treiber 30 umfasst die CAN-Bus-Schnittstelle 29 in einer darauf aufbauenden Netzwerkschicht nach dem ISO/OSI-Schichtenmodell ein oder mehrere Transport-Protokolle 32,34,36,38. Diese sind in einer Transportprotokollschicht 39 zusammengefasst. Die CAN-Bus-Schnittstelle 29 ist als Netzwerkschnittstelle ausgebildet. Dies bedeutet, dass mehrere der Anwendungen 23-28 parallel über die CAN-Bus-Schnittstelle 29 auf ein und dasselbe CAN-Bus-System 40 zugreifen können. Hierfür bietet die CAN-Bus-Schnittstelle 29 eine einheitliche Programmiererschnittstelle und ebenfalls eine einheitliche Zugriffsschnittstelle. Bei einer Implementierung in dem Betriebssystem Linux kann eines der spezifischen Transport-Protokolle 32-38 über standardisierte Berkeley-Socket-Schnittstellen abgebildet werden. Bei einer Implementierung in einem Windows-Betriebssystem können analog WinSock-Schnittstellen verwendet werden. Ein Anwendungsprogrammierer aus dem Standard-Informations-Technologie-Umfeld kann so mit etablierten Verfahren auf bekannte Art und Weise Applikationen erstellen.

Die spezifischen Transport-Protokolle 32-38 umfassen beispielsweise Protokolle wie VAG-TP2.0, Bosch MCNet und ISO-TP. Das CAN-Bus-System 40 umfasst ein Gateway 42, über das mehrere serielle CAN-Busse 44,46,48 miteinander verknüpft sind. Über die einzelnen seriellen CAN-Busse 44,46,48 sind Steuergeräte 50-65 verknüpft. Das CAN-Bus-System 40 und die Steuergeräte 50-65 sind in ein Fahrzeug 70 integriert. Bei einer Wartung des Fahrzeugs 70 wird zwischen dem CAN-Bussystem 40 und dem mindestens einen physikalischen Treiber 30 der CAN-Bus-Schnittstelle 29 des Computers 21 die CAN-Bus-Verbindung 72 hergestellt. Mittels der Diagnoseanwendung 23 wird eine Diagnose des Steuergeräts 50 durchgeführt. Hierzu wird ein Kommunikationskanal über die CAN-Bus-Schnittstelle 29 und das CAN-Bus-System 40, d.h. das Gateway 42 und den seriellen CAN-Bus 44, ausgebildet. Aufgrund der Ausgestaltung der CAN-Bus-Schnittstelle 29 als Netzwerkschnittstelle ist es der Anwendung 24 möglich, das Steuergerät 52, das an demselben seriellen CAN-Bus 44 wie das Steuergerät 50 angeschlossen ist, zeitgleich zu flashen. Ebenso können parallel die Anwendung 25 das Steuergerät 54 und die Anwendung 27 das Steuergerät 63 diagnostizieren, während die Anwendung 26 das Steuergerät 60 flasht.

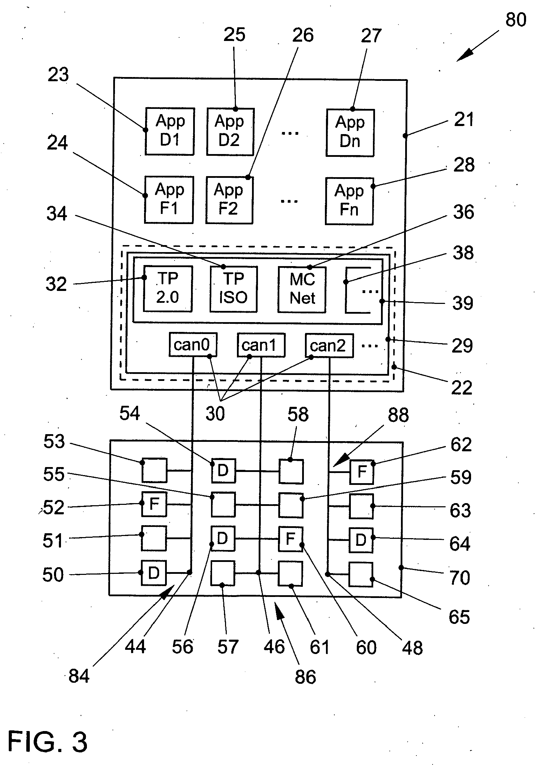

Fig. 3 zeigt eine andere Ausführungsform eines Systems 80 zum Ausführen eines parallelisierten Softwareupdates. Technisch gleiche Merkmale sind in Fig. 3 mit identischen Bezugszeichen versehen wie in Fig. 2. Die Ausführungsform nach Fig. 3 unterscheidet sich von der nach Fig. 2 dadurch, dass in dem Fahrzeug 70 die seriellen CAN-Busse 44,46,48 voneinander getrennte CAN-Bus-Systeme 84,86,88 bilden. Diese sind jeweils direkt mit einem der physikalischen Treiber 30 der CAN-Bus-Schnittstelle 29 verbunden. Auch bei dieser Ausführungsform können parallel eine Kommunikationsverbindung der Anwendung 25 mit dem Steuergerät 50, eine Kommunikationsverbindung der Anwendung 24 mit dem Steuergerät 52 und ebenfalls parallel hierzu Kommunikationsverbindungen der Anwendung 25 mit dem Steuergerät 54 und der Anwendung 26 mit dem Steuergerät 60 sowie der Anwendung 27 mit dem Steuergerät 64 sowie der Anwendung 28 mit dem Steuergerät 62 ausgebildet werden. Ebenso ist es möglich, dass auf dem CAN-Bus-System 86 zeitgleich mehrere Steuergeräte, d.h. das Steuergerät 54 und das Steuergerät 56, parallel geflasht werden.

Während bei dem System 1 nach Fig. 1 (Stand der Technik) das Verhältnis Anwendung : Transport-Protokoll: CAN-Bus-System : Steuergerät "1:1:1:1" beträgt, betragen diese Verhältnisse bei den Ausführungsformen nach Fig. 2 n:m:1:n und nach Fig. 3 n:m:c:n, wobei n jeweils die Anzahl der Anwendungen bzw. Steuergeräte angibt, zwischen denen eine Kommunikationsverbindung parallel ausbildbar ist, und m die Anzahl der hierbei verwendeten Transport-Protokolle angibt und c die Anzahl der angeschlossenen CAN-Bus-Systeme angibt. Im Fall der Fig. 3 gilt somit c=3.

Allgemein gilt, dass mit einer bevorzugten Ausführungsform zeitlich parallel zum Flashen eines der Steuergeräte ein weiteres oder mehrere weitere der Steuergeräte, die mit demselben CAN-Bussystem verknüpft sind, diagnostiziert und/oder geflasht werden können.

## Patentansprüche

1. System (20, 80) zum Ausführen eines parallelisierten Softwareupdates umfassend einen Computer (21), auf dem ein multi-tasking-fähiges Betriebssystem (22) ausführbar ist, mindestens zwei Anwendungen (23, 24, 25, 26, 27, 28), die mittels des Betriebssystems (22) auf dem Computer (21) parallel ausführbar sind, mindestens zwei Steuergeräte (50-65), die über ein serielles Datenbus-System (40; 84, 86, 88) miteinander und dem Computer (21) verknüpft sind, und eine in das Betriebssystem (22) eingepasste Datenbus-Schnittstelle, wobei zwischen einer der mindestens zwei Anwendungen (23, 24, 25, 26, 27, 28) und einem der mindestens zwei Steuergeräte (50-65; 50-53)) über die in das Betriebssystem (22) eingepasste Datenbus-Schnittstelle ein Kommunikationskanal ausbildbar ist;
**dadurch gekennzeichnet, dass**
die Datenbus-Schnittstelle als CAN-Bus-Schnittstelle (29) ausgebildet ist, die mindestens einen physikalischen Treiber (30) zum Ausbilden einer CAN-Bus-Verbindung (72) mit einem CAN-Bus-System (40) aufweist sowie eine darauf aufbauende Netzwerkschicht nach dem ISO/OSI-Schichtenmodell mit ein oder mehreren Transportprotokollen (32, 34, 36, 38), die in einer Transportprotokollschicht (39) zusammengefasst sind, wobei die CAN-Busschnittstelle (29) als Netzwerkschnittstelle ausgebildet ist, sodass mehrere Anwendungen (23-28) über die CAN-Bus-Schnittstelle (29) parallel auf ein und dasselbe CAN-Bus-System (40; 84, 86, 88) zugreifen können, wobei die CAN-Bus-Schnittstelle (29) eine einheitliche Programmier- und/oder Zugriffsschnittstelle zur Verfügung stellt, wobei die CAN-Bus-Schnittstelle (29) weiter derart ausgebildet ist, dass ein weiterer Kommunikationskanal zu einem weiteren der mindestens zwei Steuergeräte (50-65) ausgebildet wird, wobei ein Softwareupdate des weiteren der mindestens zwei Steuergeräte (50-65) über diesen weiteren Kommunikationskanal ausgeführt wird.

2. System (20, 80) nach Anspruch 1, **dadurch gekennzeichnet, dass** die eine der mindestens zwei Anwendungen eine Diagnoseanwendung ist.

3. System (20) nach Anspruch 1 oder 2, **dadurch gekennzeichnet, dass** das CAN-Bus-System (40) ein Gateway (42) umfasst, über das mehrere serielle CAN-Busse (44, 46, 48) miteinander verknüpft sind, wobei der Kommunikationskanal zwischen der CAN-Bus-Schnittstelle (29) über das Gateway (42) zu dem Steuergerät (50-65) im jeweiligen seriellen CAN-Bus (44, 46, 48) ausgebildet wird.

4. System (80) nach Anspruch 1 oder 2, **dadurch gekennzeichnet, dass** mit dem Computer (21) mindestens ein weiteres von dem Datenbus-System (84) getrenntes Datenbus-System (86, 88) verknüpft ist, an dem mindestens zwei andere Steuergeräte (54-61, 62-65) angeschlossen sind, und von anderen der mindestens zwei Anwendungen (23, 24, 25, 26, 27, 28) über die Datenbus-Schnittstelle (29) parallel zu mindestens zwei der mindestens zwei anderen Steuergeräte (54-61, 62-65) über das weitere CAN-Bus-System (86, 88) Kommunikationskanäle ausbildbar sind.

5. Verfahren zum parallelisierten Ausführens eines Softwareupdates eines von mindestens zwei Steuergeräten (50-65) mittels einer von mindestens zwei Anwendungen (23, 24, 25, 26, 27, 28), die mittels eines multi-tasking-fähigen Betriebssystems (22) auf einem Computer (21) parallel ausführbar sind, wobei die mindestens zwei Steuergeräte (50-65) über ein Datenbus-System (40; 84, 86, 88) miteinander und mit dem Computer (21) verknüpft sind und wobei in das Betriebssystem (22) eine Datenbus-Schnittstelle eingepasst ist, umfassend
a. ein Ausbilden eines Kommunikationskanals zwischen einer der mindestens zwei Anwendungen (23, 24, 25, 26, 27, 28) und einem der mindestens zwei Steuergeräte über die in das Betriebssystem (22) eingepasste Datenbus-Schnittstelle,
**dadurch gekennzeichnet, dass**
die Datenbus-Schnittstelle als CAN-Bus-Schnittstelle (29) ausgebildet ist, die mindestens einen physikalischen Treiber (30) zum Ausbilden einer CAN-Bus-Verbindung (72) mit einem CAN-Bus-System (40) aufweist sowie eine darauf aufbauende Netzwerkschicht nach dem ISO/OSI-Schichtenmodell mit ein oder mehreren Transportprotokollen (32, 34, 36, 38), die in einer Transportprotokollschicht (39) zusammengefasst sind, wobei die CAN-Busschnittstelle (29) als Netzwerkschnittstelle ausgebildet ist, sodass mehrere Anwendungen (23-28) über die CAN-Bus-Schnittstelle (29) parallel auf ein und dasselbe CAN-Bus-System (40; 84, 86, 88) zugreifen können, wobei die CAN-Bus-Schnittstelle (29) eine einheitliche Programmier- und/oder Zugriffsschnittstelle zur Verfügung stellt, wobei ein weiterer Kommunikationskanal zu einem weiteren der mindestens zwei Steuergeräte (50-65) ausgebildet wird, wobei ein Softwareupdate des weiteren der mindestens zwei Steuergeräte (50-65) über diesen weiteren Kommunikationskanal ausgeführt wird.

6. Verfahren nach Anspruch 5, **dadurch gekennzeichnet, dass** mittels der einen der mindestens zwei Anwendungen (23, 24, 25, 26, 27, 28) eine Diagnose des einen der mindestens zwei Steuergeräte (50-65) durchgeführt wird.

7. Verfahren nach Anspruch 5 oder 6, **dadurch gekennzeichnet, dass** das CAN-Bus-System (40) ein Gateway (42) umfasst, über das mehrere serielle CAN-Busse (44, 46, 48) miteinander verknüpft sind, wobei der Kommunikationskanal zwischen der CAN-Bus-Schnittstelle (29) über das Gateway (42) zu dem Steuergerät (50-65) im jeweiligen seriellen CAN-Bus (44, 46, 48) ausgebildet wird.

8. Verfahren nach Anspruch 4 oder 5, **dadurch gekennzeichnet, dass** mit dem Computer (21) mindestens ein weiteres von dem Datenbus-System (84) getrenntes Datenbus-System (86, 88) verknüpft wird, an dem mindestens zwei andere Steuergeräte (54-60, 62-65) angeschlossen sind, und von anderen der mindestens zwei Anwendungen (23, 24, 25, 26, 27, 28) über die Datenbus-Schnittstelle (29) Kommunikationskanäle parallel zu mindestens zwei der mindestens zwei anderen Steuergeräte (54-60, 62-65) über das weitere Datenbus-System (86, 88) ausgebildet werden.

## Claims

1. System (20, 80) for executing a parallelized software update, comprising a computer (21) on which an operating system (22) with multitasking capability can be executed, at least two applications (23, 24, 25, 26, 27, 28) which can be executed in a parallel manner on the computer (21) by means of the operating system (22), at least two control devices (50-65) which are linked to one another and to the computer (21) via a serial data bus system (40; 84, 86, 88), and a data bus interface fitted into the operating system (22), wherein a communication channel can be formed between one of the at least two applications (23, 24, 25, 26, 27, 28) and one of the at least two control devices (50-65; 50-53) via the data bus interface fitted into the operating system (22);
**characterized in that**
the data bus interface is in the form of a CAN bus interface (29) having at least one physical driver (30) for forming a CAN bus connection (72) to a CAN bus system (40) and a network layer based thereon according to the ISO/OSI layer model with one or more transport protocols (32, 34, 36, 38) which are combined in a transport protocol layer (39), wherein the CAN bus interface (29) is in the form of a network interface, with the result that a plurality of applications (23-28) can access the same CAN bus system (40; 84, 86, 88) in a parallel manner via the CAN bus interface (29), wherein the CAN bus interface (29) provides a unified programming and/or access interface, wherein the CAN bus interface (29) is also designed such that a further communication channel to a further one of the at least two control devices (50-65) is formed, wherein a software update of the further one of the at least two control devices (50-65) is executed via this further communication channel.

2. System (20, 80) according to Claim 1, **characterized in that** the one of the at least two applications is a diagnostic application.

3. System (20) according to Claim 1 or 2, **characterized in that** the CAN bus system (40) comprises a gateway (42) via which a plurality of serial CAN buses (44, 46, 48) are linked to one another, wherein the communication channel is formed between the CAN bus interface (29), via the gateway (42), to the control device (50-65) in the respective serial CAN bus (44, 46, 48).

4. System (80) according to Claim 1 or 2, **characterized in that** at least one further data bus system (86, 88), which is separate from the data bus system (84) and to which at least two other control devices (54-61, 62-65) are connected, is linked to the computer (21), and communication channels can be formed from others of the at least two applications (23, 24, 25, 26, 27, 28), via the data bus interface (29), parallel to at least two of the at least two other control devices (54-61, 62-65) via the further CAN bus system (86, 88).

5. Method for the parallelized execution of a software update of one of at least two control devices (50-65) by means of one of at least two applications (23, 24, 25, 26, 27, 28) which can be executed in a parallel manner on a computer (21) by means of an operating system (22) with multitasking capability, wherein the at least two control devices (50-65) are linked to one another and to the computer (21) via a data bus system (40; 84, 86, 88), and wherein a data bus interface is fitted into the operating system (22), comprising
a. forming a communication channel between one of the at least two applications (23, 24, 25, 26, 27, 28) and one of the at least two control devices via the data bus interface fitted into the operating system (22),
**characterized in that**
the data bus interface is in the form of a CAN bus interface (29) having at least one physical driver (30) for forming a CAN bus connection (72) to a CAN bus system (40) and a network layer based thereon according to the ISO/OSI layer model with one or more transport protocols (32, 34, 36, 38) which are combined in a transport protocol layer (39), wherein the CAN bus interface (29) is in the form of a network interface, with the result that a plurality of applications (23-28) can access the same CAN bus system (40; 84, 86, 88) in a parallel manner via the CAN bus interface (29), wherein the CAN bus interface (29) provides a unified programming and/or access interface, wherein a further communication channel to a further one of the at least two control devices (50-65) is formed, wherein a software update of the further one of the at least two control devices (50-65) is executed via this further communication channel.

6. Method according to Claim 5, **characterized in that** the one of the at least two control devices (50-65) is diagnosed by means of the one of the at least two applications (23, 24, 25, 26, 27, 28).

7. Method according to Claim 5 or 6, **characterized in that** the CAN bus system (40) comprises a gateway (42) via which a plurality of serial CAN buses (44, 46, 48) are linked to one another, wherein the communication channel is formed between the CAN bus interface (29), via the gateway (42), to the control device (50-65) in the respective serial CAN bus (44, 46, 48).

8. Method according to Claim 4 or 5, **characterized in that** at least one further data bus system (86, 88), which is separate from the data bus system (84) and to which at least two other control devices (54-60, 62-65) are connected, is linked to the computer (21), and communication channels are formed from others of the at least two applications (23, 24, 25, 26, 27, 28), via the data bus interface (29), parallel to at least two of the at least two other control devices (54-60, 62-65) via the further data bus system (86, 88).

## Revendications

1. Système (20, 80) pour exécuter une mise à jour de logiciel en parallèle, comprenant un ordinateur (21) sur lequel peut être exécuté un système d'exploitation (22) capable de multitâches, au moins deux applications (23, 24, 25, 26, 27, 28) qui peuvent être exécutées en parallèle sur l'ordinateur (21) au moyen du système d'exploitation (22), au moins deux contrôleurs (50-65) qui sont connectés entre eux et avec l'ordinateur (21) par le biais d'un système de bus de données série (40 ; 84, 86, 88), et une interface de bus de données incorporée dans le système d'exploitation (22), un canal de communication pouvant être formé entre l'une des au moins deux applications (23, 24, 25, 26, 27, 28) et l'un des au moins deux contrôleurs (50-65 ; 50-53) par le biais de l'interface de bus de données incorporée dans le système d'exploitation (22) ;
**caractérisé en ce que**
l'interface de bus de données est réalisée sous la forme d'une interface de bus CAN (29), laquelle possède au moins un circuit pilote physique (30) destiné à former une liaison de bus CAN (72) avec un système de bus CAN (40) ainsi qu'une couche de réseau qui s'établit sur celle-ci selon le modèle des couches ISO/OSI avec un ou plusieurs protocoles de transport (32, 34, 36, 38), lesquels sont regroupés dans une couche de protocole de transport (39), l'interface de bus CAN (29) étant réalisée sous la forme d'une interface de réseau de sorte que plusieurs applications (23-28) peuvent accéder en parallèle à un seul et même système de bus de données série (40 ; 84, 86, 88) par le biais de l'interface de bus CAN (29), l'interface de bus CAN (29) mettant à disposition une interface de programmation et/ou d'accès uniformisée, l'interface de bus CAN (29) étant en outre configurée de telle sorte qu'un canal de communication supplémentaire vers un autre des au moins deux contrôleurs (50-65) est formé, une mise à jour de logiciel de l'autre des au moins deux contrôleurs (50-65) étant effectuée par le biais de ce canal de communication supplémentaire.

2. Système (20, 80) selon la revendication 1, **caractérisé en ce que** l'une des au moins deux applications est une application de diagnostic.

3. Système (20) selon la revendication 1 ou 2, **caractérisé en ce que** le système de bus CAN (40) comporte une passerelle (42) par le biais de laquelle plusieurs bus CAN séries (44, 45, 48) sont connectés entre eux, le canal de communication entre l'interface de bus CAN (29) et le contrôleur (50-65) étant formé par le biais de la passerelle (42) dans le bus CAN série (44, 45, 48) respectif.

4. Système (80) selon la revendication 1 ou 2, **caractérisé en ce qu'**au moins un système de bus de données (86, 88) supplémentaire, séparé du bus de données (84), est connecté à l'ordinateur (21), au moins deux autres contrôleurs (54-61, 62-65) étant raccordés à celui-ci, et des canaux de communication peuvent être formés par l'autre des au moins deux applications (23, 24, 25, 26, 27, 28) par le biais de l'interface de bus de données (29) parallèlement à au moins deux des au moins deux autres contrôleurs (54-61, 62-65) par le biais du système de bus de données (86, 88) supplémentaire.

5. Procédé pour exécuter en parallèle une mise à jour de logiciel de l'un d'au moins deux contrôleurs (50-65) au moyen d'une d'au moins deux applications (23, 24, 25, 26, 27, 28), lesquelles peuvent être exécutées en parallèle sur un ordinateur (21) au moyen du système d'exploitation (22) capable de multitâches, les au moins deux contrôleurs (50-65) étant connectés entre eux et avec l'ordinateur (21) par le biais d'un système de bus de données série (40 ; 84, 86, 88), et une interface de bus de données étant incorporée dans le système d'exploitation (22), comprenant
a. une formation d'un canal de communication entre l'une des au moins deux applications (23, 24, 25, 26, 27, 28) et l'un des au moins deux contrôleurs par le biais de l'interface de bus de données incorporée dans le système d'exploitation (22),
**caractérisé en ce que**
l'interface de bus de données est réalisée sous la forme d'une interface de bus CAN (29), laquelle possède au moins un circuit pilote physique (30) destiné à former une liaison de bus CAN (72) avec un système de bus CAN (40) ainsi qu'une couche de réseau qui s'établit sur celle-ci selon le modèle des couches ISO/OSI avec un ou plusieurs protocoles de transport (32, 34, 36, 38), lesquels sont regroupés dans une couche de protocole de transport (39), l'interface de bus CAN (29) étant réalisée sous la forme d'une interface de réseau de sorte que plusieurs applications (23-28) peuvent accéder en parallèle à un seul et même système de bus de données série (40 ; 84, 86, 88) par le biais de l'interface de bus CAN (29), l'interface de bus CAN (29) mettant à disposition une interface de programmation et/ou d'accès uniformisée, un canal de communication supplémentaire vers un autre des au moins deux contrôleurs (50-65) étant formé, une mise à jour de logiciel de l'autre des au moins deux contrôleurs (50-65) étant effectuée par le biais de ce canal de communication supplémentaire.

6. Procédé selon la revendication 5, **caractérisé en ce qu'**un diagnostic de l'un des au moins deux contrôleurs (50-65) est effectué au moyen de l'une des au moins deux applications (23, 24, 25, 26, 27, 28).

7. Procédé selon la revendication 5 ou 6, **caractérisé en ce que** le système de bus CAN (40) comporte une passerelle (42) par le biais de laquelle plusieurs bus CAN séries (44, 46, 48) sont connectés entre eux, le canal de communication entre l'interface de bus CAN (29) et le contrôleur (50-65) étant formé par le biais de la passerelle (42) dans le bus CAN série (44, 45, 48) respectif.

8. Procédé selon la revendication 5 ou 6, **caractérisé en ce qu'**au moins un système de bus de données (86, 88) supplémentaire, séparé du bus de données (84), est connecté à l'ordinateur (21), au moins deux autres contrôleurs (54-61, 62-65) étant raccordés à celui-ci, et des canaux de communication sont formés par l'autre des au moins deux applications (23, 24, 25, 26, 27, 28) par le biais de l'interface de bus de données (29) parallèlement à au moins deux des au moins deux autres contrôleurs (54-61, 62-65) par le biais du système de bus de données (86, 88) supplémentaire.
